# EUROPEAN PATENT SPECIFICATION

(11) **EP 0 574 601 B1**
(45) Date of publication and mention of the grant of the patent: **16.09.1998**
(21) Application number: 92110082.2
(22) Date of filing: 15.06.1992
(51) Int. Cl.: G01N 21/35, G01N 21/17

(54) **Improved method and apparatus for optical interactance and transmittance measurements**
Verbessertes Verfahren und Gerät für optische Zwischenwirkungs- und Durchlassungsvermögenmessungen
Méthode et appareil perfectionnés pour des mesures d'interactance et de transmittance optiques

(43) Date of publication of application: 22.12.1993
(73) Proprietor: Stark, Edward W., New York, New York 10023 (US)
(72) Inventor: Stark, Edward W., New York, New York 10023 (US)
(74) Representative: Geyer, Werner, Dr.-Ing.

(56) References cited:
- EP-A- 0 351 994
- US-A- 3 786 266
- US-A- 4 627 014
- US-A- 4 633 087
- US-A- 4 800 885
- THE AMERICAN JOURNAL OF CLINICAL NUTRITION vol. 40, 1 December 1984, pages 1123 - 1130 J.CONWAY ET AL. 'A NEW APPROACH FOR THE ESTIMATION OF BODY COMPOSITION, ETC.'
- TRANSACTIONS OF THE ASAE vol. 21, no. 3, 1 June 1978, pages 581 - 584 E.FINNEY ET AL. 'DETERMINATION OF MOISTURE IN CORN KERNELS,ETC.' WHOLE DOCUMENT

## Description

### Field of the Present Invention

The present invention relates to an improved method and apparatus for performing optical interactance and transmittance measurements and, in particular, such method and apparatus where undesired information is discriminated against and desired information is enhanced. Reflectance measurements on small amounts of specimen are also encompassed by the invention.

### Background of the Problem Solved by the Present Invention

When optical energy is transmitted through a diffuse medium, scattering causes redirection of the rays so that the geometric pathlength between the energy entrance point and the energy exit point no longer defines the distance energy travels within the specimen. In addition, substantial energy may be scattered back towards the entrance or otherwise away from the exit region where detection occurs, thereby reducing the detected signal. This signal is therefore variable depending on the scattering characteristics of the particular region of the specimen traversed by the optical radiation.

A further cause of interference is nonhomogeneous or layered distribution of specimen characteristics, e.g., the layers of skin and fat which cover muscle tissue, the skin which covers the flesh of a fruit or vegetable, or the coating of windows through which measurements are to be made. Often, it is desirable to eliminate the effects of the surface layers to provide information on the underlying portions of the specimen. The present invention is directed to solving these problems which cause inaccuracies in spectroscopic determination of qualitative or quantitative characteristics of the specimen.

An additional problem is the making of diffuse reflectance and transmittance measurements on small specimens. Present reflectance instruments are generally designed to illuminate the specimen and detect reflected energy over several square centimeters of area. It is sometimes necessary to work with small amounts of specimen, for example a single seed, which must be recovered intact for future use. The present invention also addresses both diffuse transmission and diffuse reflection measurements of small specimens.

### Background Prior Art

There has been a proposal for use of a transmission cell which had two different pathlengths through the specimen as a means of extending the dynamic range of spectral measurements in clear solutions. This proposal did not encompass separate measurement of the signals for the two pathlengths but rather the combined optical energy was detected. This results in a very nonlinear signal relative to concentration of an analyte within the specimen, however, the nonlinearity is predictable based on the known optical geometry of the cell.

Dual pathlength transmission cells with separate detection have been proposed to remove the effects of window coating in transmission measurements through clear liquids. This approach is equivalent to placing a second cell of different thickness in the reference beam of a dual-beam spectrometer. Effects common to the two paths, such as absorption due to the window material, equal deposits on the windows, atmospheric absorption, and the specimen absorption in the equal portion of the pathlength are canceled by taking the simple ratio of the signals derived from the two paths.

Norris ["A New Approach for the Estimation of Body Composition: Infrared Interactance",_{,} Joan M. Conway, Karl H. Norris and C.E. Bodwell, American Journal of Clinical Nutrition, Vol. 40, pp. 1123-1130 (1984)] first proposed measurement by means of "interaction", whereby a diffuse specimen is illuminated at one location and energy is collected some distance away on the same surface of the specimen. This is similar to diffuse reflection in that the primary mechanism returning energy to the detector is scattering, i.e., in the absence of scattering within the specimen, the incident energy would not impinge on the detection region. It differs from diffuse reflection, however, because the detection region does not include the illumination region, but is separated from it by some distance. Therefore, surface reflection of energy does not contribute to the detected signal and all the detected energy has traversed a minimum distance within the specimen, the separation distance between the source and detector. In this sense, "interaction" is similar to diffuse transmission. In general, the effective depth of penetration and the effective pathlength both increase as the spacing between the source and detection locations is increased.

Norris and others applying his method have used a single measurement of the energy passing through the specimen from the source region to the detection region. Typically, uniform geometric spacing between the source area and the detection area is provided by using a central aperture surrounded a small distance away by a ring aperture. Either aperture could serve for the source while the other is used for detection. Both apertures are usually in contact with the specimen to prevent energy from leaking between the source and detection regions without traversing the specimen although thin windows between the apertures and the source have been used. An alternative structure has been to use equally parallel slit apertures, alternating between source and detection functions. In this case, all the source slit apertures were illuminated through one fiber optic bundle while energy was collected from all the detection apertures by means of a second bundle. Therefore, although more than two apertures exist, there is only one detected signal.

US-A-4 633 087 discloses a non-destructive testing instrument using interactance of near infrared radiation. Light incident in an annular region is detected by a single detector at the centre of this region. A single measurement of the summed light outputs is made.

Diffuse transmittance and reflectance measurements are usually made on large volumes of specimen to reduce errors by averaging the inhomogeneities. When only small specimens are available, the usual procedure is to grind each specimen into a fine powder and mix it with a nonabsorbing diluent or to spread it on a diffusely reflecting background so as to present a large area for reflectance measurement. There has been a proposed use of a reflecting cone into which the specimen is placed. The incident energy which does not impinge the specimen is returned in the direction of the source, and is rejected by the diffuse reflectance detection geometry. Norris ["Determination of Moisture in Corn Kernals by Near-Infrared Transmittance Measurement", E.E. Finney, Jr. and Karl H. Norris, Transactions American Society of Agricultural Engineers, Vol. 21, pp. 581-584 (1978)] has made diffuse transmission measurements on single seeds by focusing the energy on the seed and placing a large area detector behind the opposite side. Careful attention must be paid to block the direct path past the seed. These methods for handling intact small samples have been inconvenient at best.

### Summary of the Invention

In accordance with the invention, a method for improving optical interactance measurements according to claim 1.

Also in accordance with the invention, apparatus for improving optical interactance measurements according to claim 8.

For a better understanding of the present invention, reference is made to the following description and accompanying drawings while the scope of the invention will be pointed out in the appended claims.

### Brief Description of the Drawings

In the drawings,
Figures 1A and 1B are a cross-sectional, length-wise view in partially schematic form of a two-ring, central aperture probe in accordance with the invention; and
Figure 2 is a diametric cross-section of a probe exhibiting a multiple ring aperture structure in accordance with the invention.

### Description of the Invention and Preferred Embodiments

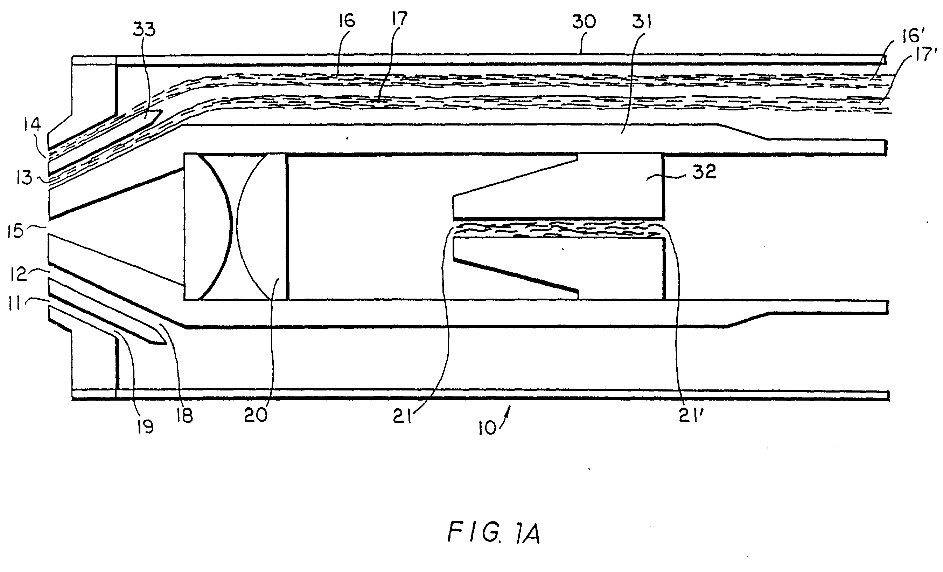

A first aspect of this invention comprises the use of three or more optical apertures shared among the source and illumination functions so as to provide two or more independent signals for further processing and analysis. For example, in Figure 1A, a probe utilizing fiber optics is shown which has two ring apertures surrounding a central round aperture.

In Figure 1A, the probe 10 includes a cylindrical outer body 30 in which a concentric inner body 31 is arranged. The inner body 31 tapers at the examining end to a central aperture 15. The outer body 30 constricts at the examining end to define a conical, inwardly directed wall. The tapered end of the inner body 31 defines a second conical wall. Between these two walls is disposed a conical dividing element 33. The angles defined by the two walls and the conical dividing element are preferably the same. Conical annular spaces or rings (shown in cross-section as 14, 13, 12 and 11) are defined by the two walls and dividing element. In these annular spaces or rings are disposed, in conical fashion, optical fibers 16 and 17 for supplying illumination to the specimen. Within the inner body 31 are disposed one or more lenses 20 for focusing and transmitting incident light entering the aperture 15. A central fiber element 21, supported by element 32, receives light from the lenses 20, and directs it to the exit portion 21' of the probe. Illumination for fibers 16 and 17 is provided at 16' and 17'.

In this apparatus, each ring is used for illumination by fiber optic elements while the central detection aperture is connected by fiber optics to a detection system, such as a diode-array spectrophotometer. The central aperture in one embodiment is 1.2 mm diameter, and the inner ring has a mean diameter of 6 mm with a width of 1 mm. The mean spacing from the inner ring to the central aperture is therefore 3 mm and the minimum spacing is 1.9 mm. The outer ring has a mean diameter of 12 mm and a width of 1 mm, providing a mean spacing from source to detection of 6 mm and a minimum spacing of 4.9 mm.

In a preferred arrangement, the tip portion of the probe and the fiber optic elements at the tip portion are angled at approximately 26° with respect to the longitudinal axis of the probe.

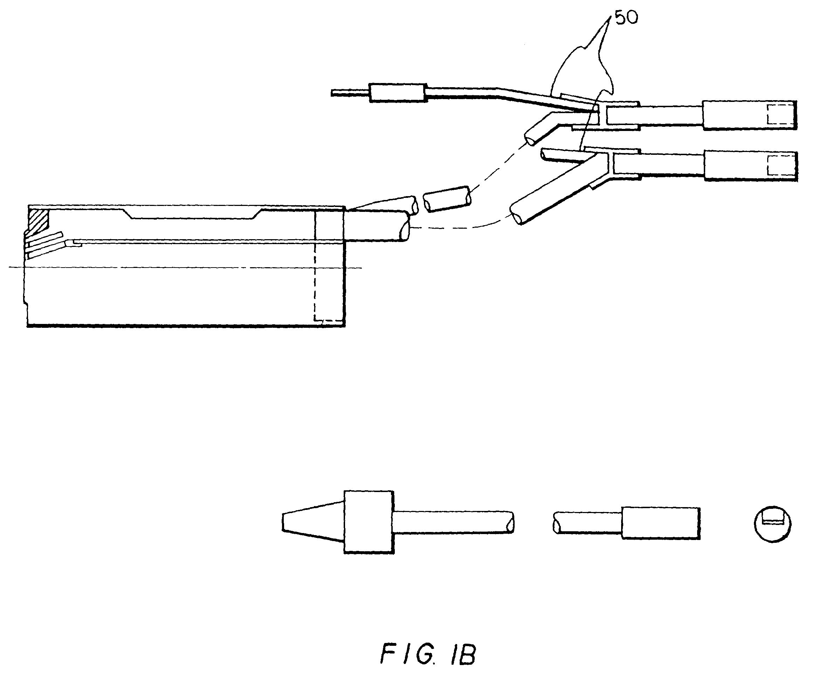

It will be noted in Figure 1 that the central detection assembly is movable axially. For interactance measurements, the detection aperture at the distal end of this assembly is normally positioned in the same plane as the source ring apertures, however, it may be moved back and lenses inserted so as to image a detection area on the specimen into the aperture of the detection fibers. The lenses 20 in the inner body of the probe are interchangeable and the positions of the lenses and the central detection assembly are adjustable by means of spacers. In one embodiment, lenses and arrangements for three different specimen sizes for reflectance and one arrangement for interactance are listed in the following Table 1:

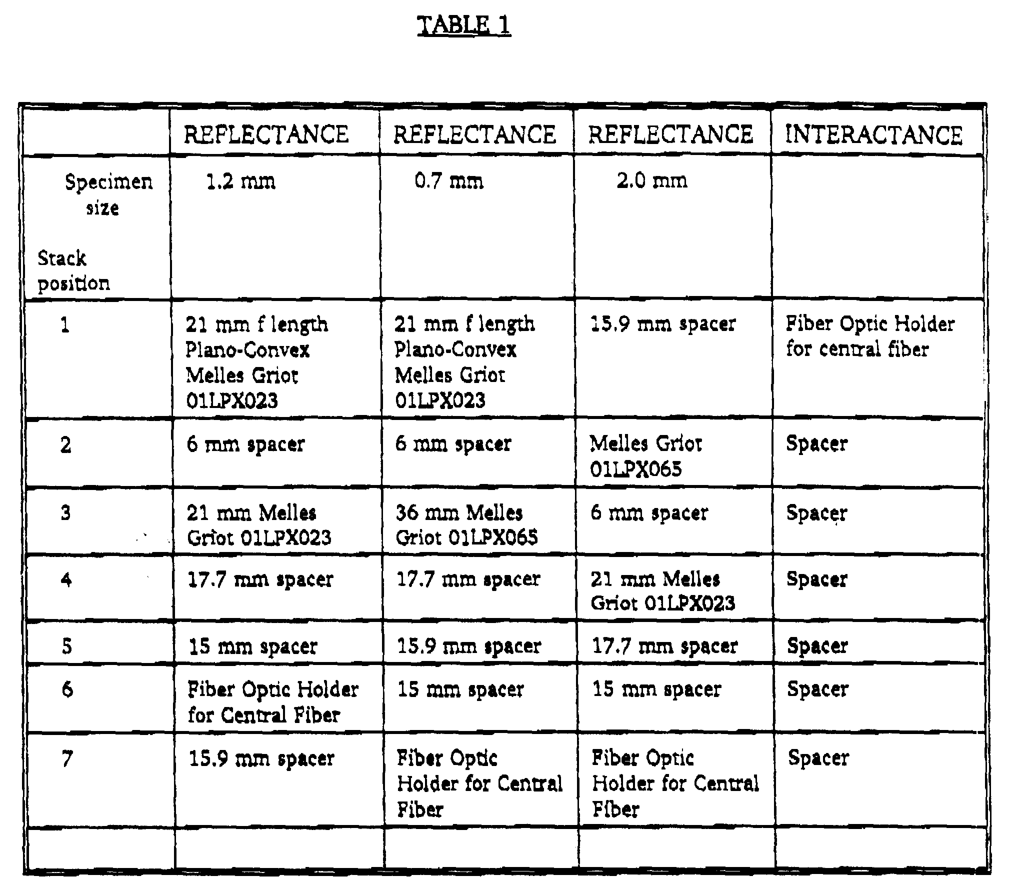

This reimaging allows control of the size of the detection area and the angular cone within which energy is detected by changing the lenses and their spacing.

It may also he seen in Figure 1 that the energy source fibers are arranged in conical form. The energy exits at a mean angle of approximately 45° based on the angle of the fibers and the refraction at their polished ends. For interactance measurements on specimens which have limited backscatter, introduction of the energy at an angle directed toward the detector improves the efficiency. This feature also provides for diffuse reflectance and transmittance measurements using the same probe as discussed below.

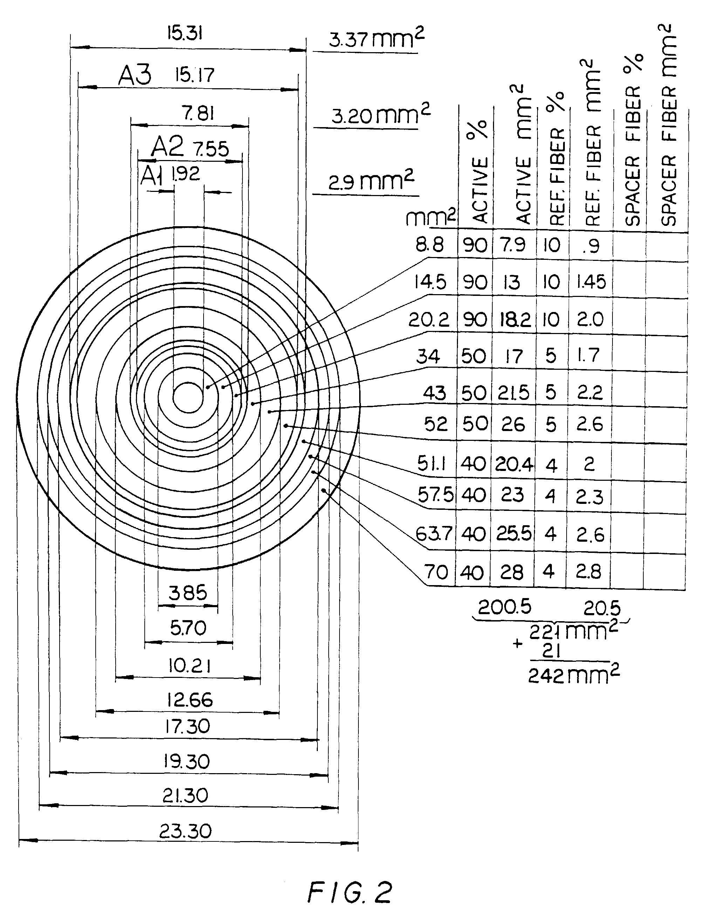

In order to obtain separate signals for each spacing, the two source rings may be alternately illuminated or the source energy may be modulated differently, e.g., at two different frequencies or with different time sequence codes. The detection signal is then gated or demodulated to separate the information from the two different sources. As shown in Figure 1B, each source fiber optic bundle, preferably, has a small percentage of its input fibers brought out 50 so that the associated source intensity and modulation can be monitored. It will be obvious to one skilled in the art that additional source rings may be provided, each with its distinctive modulation, and that the operation may be reversed to provide a single source by using two or more detection rings coupled to multiple or time- shared detection means. For example, Figure 2 shows a design comprising 10 large area (8 to 28 mm² active area) ring apertures, nominally designated as source rings, and a central aperture plus 2 additional rings of smaller area (2.9 to 3.4 mm²) nominally considered as detection rings. The source ring active area is adjusted by the density of active fibers within each ring. This structure allows selection of a wide variety of spacings and locations for the measurements using combinations of the three different detection apertures and 10 source apertures. While the examples shown here show ring geometries, other geometries, such as parallel slits or small apertures, which provide substantially constant values of the spacing between all points within a given source aperture and those within a given detection aperture may be used.

Having derived separate signals for the two or more paths, they are processed and combined in accordance with a linear or nonlinear model of the system response to variations in the concentration of the analytes and interferences present in the spectrum. In the simplest cases, for example, the cancellation of the optical effects of deposits on the window through which the measurements are being made, it may suffice to use the ratio of the signal from one spacing to that of a second spacing. This assumes that the deposits have the same transmission spectrum T₁ for both paths, as would be true for a uniform coating, and that the specimen behind the window is relatively homogeneous with an interactance spectrum, I. The signals may then be expressed as K₁∗T₁∗I₁ and K₂∗T₁∗I₂ where K₁ and K₂ are system functions involving the relative source intensities, the gain through the system, scattering losses and similar factors. The ratio is therefore (K₁/K₂) ∗ (I₁/I₂) and the window coating transmission has been eliminated from the result. Note that any factors common to K₁ and K₂ are also canceled as in the normal use of a reference and the remainder factors may be adjusted so that the K factor becomes unity. Taking the log of the ratio yields "absorbance" A equal to log(I₁) - log(I₂). If I is exponentially related to the product spacing t and the analyte absorptivity a, log(I) will equal (a∗t) and the log difference becomes a∗(t₁-t₂) where a is the "absorptivity" spectrum which is linearly related to concentration. In many, if not most, practical cases, log(I) is not linearly related to the product of spacing with absorptivity and absorptivity is not linearly related to concentration. Therefore, this invention contemplates use of other linear and nonlinear chemometric models to define the relationships and provide quantitive analyte information.

The situation is further complicated if the specimen is nonhomogeneous, such as the cases with layers described above. Here, the various signals are derived by absorption of light through different combinations of materials within the specimen. All the signals contain information on the surface layers while the signals derived from the larger spacings contain information on the deeper layers that is diminished or lacking in the signals measured with smaller spacings. When it is desired to differentiate between the information derived from deep within the sample and that obtained from layers closer to the surface, these signals may be combined in a linear or nonlinear chemometric model so as to extract the desired information. In this case, it is helpful to have the input energy for each source aperture as an additional measured quantity for use in the modeling. Each class of specimens requires a different form of model, and subclasses require determination of various model parameters during the calibration process.

Another aspect of the invention is the use of the probe for diffuse reflection measurements of small specimens. The specimen may be held in a small hole drilled in a flat plate mounted approximately 2 to 4 mm from the end of the fiber-optic probe. It is illuminated via one or both of the outer ring bundles at an angle of incidence of approximately 45 degrees. The plate to finished with a mirror surface so that incident energy outside the area of the specimen is reflected at approximately 45 degrees from the normal. The diffusely reflected energy is collected by imaging the specimen surface on the central fiber bundle via lenses whose optical axes are coincident with the axis of the probe assembly. The power and spacing of the lenses may be selected so as to select the desired sample area. Because the collection it normal to the specimen and specimen holder and energy is reflected by the holder and by any window above the specimen at an angle, this specularly reflected energy is rejected from the measurement. If desired, a diffuse or specular reflector may be placed behind the specimen to increase its apparent depth by a factor of at least two.

Alternatively, the axis of the probe may be positioned vertically with the apertures at the top and a transparent window, such as a microscope slide, positioned with its upper surface at the appropriate distance from the apertures. Specimens may be placed on the window for measurement. Three measurements may be made:
a) no specimen (just a slide);
b) specimen
c) reference spectrum using a diffuse reflecting material such as SPECTRALON™ (a trademark of Labsphere, Inc.).

The "no specimen" energy spectrum it subtracted from the spectrum of the specimen and the spectrum of the reference to correct for residual energy reflected or scattered from the window.

Still another embodiment utilizes the probe as described above for reflection and an additional fiber bundle is employed behind the specimen to illuminate it. Therefore, the same receiver is utilized for transmittance and reflectance with two different illumination sources being provided. A switching arrangement may be used to alternate between the illumination sources.

In each case, the central detection element may comprise the detector itself rather than the fiberoptic detector bundle.

While the above described probe is preferred, an alternate embodiment can be constructed where the direction of light flow can use the light source being provided at the control aperture and one or more of the fiber optic bundles responsive to specimen information.

## Claims

1. A method for improving optical interactance measurements, wherein a specimen is illuminated at one location on its surface and energy is collected some distance away on the said surface of said specimen, comprising :
- providing illumination (16', 17') by way of a plurality of different paths through said specimen having a characteristic to be measured; and characterized by the steps of:
- sensing a plurality of independent signals developed at the same time or in rapid sequence representing optical information obtained from said specimen in response to said illumination, each independent signal corresponding to a particular path, wherein each of said plurality of independent signals is derived from light having travelled a path distance different from light having travelled a path distance associated with every other of said plurality of signals; and
- processing said signals in accordance with appropriate modeling techniques to minimize inaccuracies in spectroscopic determination of qualitative or quantitative characteristics of the specimen.

2. Method of claim 1, characterized in that light is sent along different paths to the sample surface, where light on each path is incident at a point or region at said location and is sensed at a different common detection point or region and that the distance from the incident point or region to the detection point or region is different in each case.

3. The method of claim 1 characterized by the step of providing the illumination (16', 17') of the specimen simultaneously along said different paths.

4. The method of claim 1, characterized by the step of providing the illumination (16', 17') of the specimen sequentially along said different paths.

5. The method of claims 3 or 4, characterized by the step of providing the illumination (16', 17') of the specimen modulated at different frequencies along said different paths respectively for distinguishing one independent sensed signal from another.

6. The method according to anyone of claims 3 to 5, characterized by the step of providing illumination (16', 17') of the specimen with different time sequence codes along said different paths respectively for distinguishing one independent sensed signal from another.

7. The method according to anyone of claims 1 to 6 characterized by the step of providing the illumination (16', 17') at an angle with respect to the optic axis of the detection means.

8. Apparatus for improving optical interactance measurements wherein a specimen is illuminated at one location on its surface and energy is collected some distance away on the said surface of said specimen,
comprising
- means for sensing optical information (20, 21, 21') developed by said illumination provided from said illuminated specimen;
- means for providing illumination (16', 17') to said specimen having a characteristic to be measured along a plurality of different paths; and characterized by:
- means (11, 12, 13, 14), responsive to said sensed optical information, for developing a plurality of independent signals corresponding in number to said plurality of paths, said signals representing said optical information obtained from said specimen, wherein each of said plurality of independent signals is derived from light having travelled a path distance different from light having travelled a path distance associated with every other of said plurality of signals; and
- means for processing said signals in accordance with appropriate modeling techniques to minimize inaccuracies in spectroscopic determination of quantitative or qualitative characteristics of the specimen.

9. Apparatus of claim 8, characterized in that light is sent along different paths to the sample surface, where light on each path is incident at a different point or region from a detection point or region and that the distance from the incident point or region to the detection point or region is different in each case.

10. The apparatus of claim 8 characterized by means for providing the illumination (16', 17') simultaneously along said paths.

11. The apparatus of claim 8 characterized by means for providing the illumination (16', 17') sequentially along said paths.

12. The apparatus of claim 8 characterized by means for modulating said illumination provided to said paths so that each path had a different modulating characteristic, said apparatus also including means responsive to said independent signals for demodulating said signals.

13. The apparatus according to anyone of claims 8 to 12, characterized by
- an elongated probe (10) having a body (30,31) portion and a tip portion, the body (30,31) portion comprising a central tubular element surrounded by an annular outer element;
- the tip portion having a central aperture (15) which communicates with said central tubular element and at least one ring aperture which communicates with said annular outer element;
- the ring or rings (11, 12, 13, 14) in said tip portion being angled with respect to the longitudinal axis of the probe (10);
and either:
- a number of fiber optic bundles (16, 17) whose number corresponds to said ring or rings (11, 12, 13, 14) being disposed within said outer element, each bundle being arranged at one end to exit at a respective ring and, at the other end, at least one such bundle to be connected to a source of illumination; and
- optical means disposed in the central tubular element for receiving optical information resulting from applied illumination to a specimen from said central aperture (15) from a specimen and for conveying said information to a sensing device so as to develop signals representing said specimen optical information;
or
- a plurality of the fiber optic bundles (16, 17) whose number corresponds to said plurality of rings (11, 12, 13, 14) being disposed within said outer element, at least one bundle being arranged at one end to exit at a respective ring for receiving specimen information and, at the other end, adapted to be connected to a detector for developing a signal; and
- said central tubular element being connected at one end with a source of illumination, which illumination will exit at the central aperture (15);
- whereby independent signals responsive to said illumination representing said specimen information are developed.

14. The apparatus of claim 13 characterized in that each fiber optic bundle (16, 17) is arranged at the other end to be connected to a source of illumination.

15. The apparatus of claim 13 or 14 characterized in that said tip portion and fiber optic elements (21) at the tip portion are angled at approximately 26° with respect to the longitudinal axis of the probe (10).

16. The apparatus according to anyone of claims 13 to 15 characterized by at least one lens (20) disposed in said central tubular element for focusing the optical information received in said central aperture (15) and means responsive to the focused information for forming a signal representing said information.

17. The apparatus of claim 16 characterized in that said means responsive to the focused information includes a fiber optic element (21) for conveying the focused optical information to a detector responsive to the optical information conveyed by the fiber optic element (21).

18. The apparatus according to anyone of claims 13 to 17 characterized by fiber optic means and a detector for providing a signal representative of the illumination received by the specimen.

19. The apparatus of claim 16 characterized by further means for allowing the focusing of said lenses (20) to be changed.

20. Use of an apparatus according to anyone of claims 8 to 19 for improved optical interactance, transmittance and reflectance measurements.

21. Use of an apparatus according to anyone of claims 8 to 19 or claim 20 characterized by arranging the tip of the probe (10) adjacent a specimen of small size so that reflected energy from said specimen is directed to said central aperture (15).

22. Use according to claim 20 or 21 characterized by providing a further source of illumination, arranging the tip of the probe (10) adjacent a near side of a specimen of small size, arranging the further source of illumination on a far side of said specimen, using said probe (10) so that reflected energy from said specimen is directed to said central aperture (15) and/or energy transmitted by said further source through said specimen is directed to said central aperture (15).

23. Use according to anyone of claims 20 to 22 characterized by the steps of providing a further detector for developing an electrical signal responsive to illumination, arranging the top of the probe (10) adjacent the near side of a specimen of small size, arranging said further detector on a far side of said specimen, using said probe (10) so that reflected energy from said specimen is directed to said central aperture (15) and/or energy transmittal by said probe (10) is detected by said further detector.

24. Use according to anyone of claims 20 to 23 characterized by the step of selectively choosing an operational mode of reflectance, transmittance or combined reflectance and transmittance.

## Patentansprüche

1. Verfahren zum Verbessern optischer Wechselwirkungsmessungen, wobei eine Probe an einer Stelle auf ihrer Oberfläche beleuchtet und Energie in einiger Entfernung davon auf der erwähnten Oberfläche der Probe gesammelt wird, welches
- die Bereitstellung einer Beleuchtung (16',17') mittels einer Vielzahl verschiedener Wege durch die Probe, die eine zu messende Eigenschaft aufweist, umfaßt und durch folgende Schritte gekennzeichnet ist:
- Erfassen einer Vielzahl unabhängiger Signale, die sich gleichzeitig oder in rascher Aufeinanderfolge entwickeln und optische Information darstellen, die von der Probe als Reaktion auf das Licht erhalten wurde, wobei jedes Signal einem bestimmten Weg entspricht und jedes der Vielzahl unabhängiger Signale von Licht stammt, das eine Weglänge zurückgelegt hat, die sich von derjenigen des Lichtes unterscheidet, das eine Weglänge zurückgelegt hat, die jedem anderen der Vielzahl von Signalen zugeordnet ist; und
- Verarbeitung der Signale mit geeigneten Modellen zur Minimierung von Ungenauigkeiten bei der spektroskopischen Bestimmung qualitativer oder quantitativer Eigenschaften der Probe.

2. Verfahren nach Anspruch 1, dadurch gekennzeichnet, daß Licht entlang unterschiedlicher Wege zur Probenoberfläche gesandt wird, wobei das Licht jedes Weges in einen Punkt oder Bereich an dieser Stelle einfällt und in einem anderen allgemeinen Detektionspunkt oder -bereich erfaßt wird, und daß die Entfemung von dem Eintrittspunkt oder -bereich zu dem Detektionspunkt oder -bereich für jeden Fall unterschiedlich ist.

3. Verfahren nach Anspruch 1, gekennzeichnet durch den Schritt, bei dem die Beleuchtung (16',17') der Probe gleichzeitig entlang verschiedener Wege bereitgestellt wird.

4. Verfahren nach Anspruch 1, gekennzeichnet durch den Schritt, bei dem die Beleuchtung (16', 17') der Probe nacheinander entlang verschiedener Wege bereitgestellt wird.

5. Verfahren nach Anspruch 3 oder 4, gekennzeichnet durch den Schritt, bei dem die Beleuchtung (16', 17') der Probe bei unterschiedlichen Frequenzen moduliert und entlang jeweils unterschiedlicher Wege bereitgestellt wird, um ein von einem anderen unabhängig erfaßtes Signal zu unterscheiden.

6. Verfahren nach einem der Ansprüche 3 bis 5, gekennzeichnet durch den Schritt, bei dem die Beleuchtung (16', 17') der Probe jeweils mit unterschiedlichen Zeitsequenzcodes entlang der verschiedenen Wege bereitgestellt wird, um ein von einem anderen unabhängig erfaßtes Signal zu unterscheiden.

7. Verfahren nach einem der Ansprüche 1 bis 6, gekennzeichnet durch den Schritt, bei dem die Beleuchtung (16', 17') in einem auf die optische Achse der Detektionseinrichtung bezogenen Winkel bereitgestellt wird.

8. Gerät zum Verbessern optischer Wechselwirkungsmessungen, wobei eine Probe an einer Stelle auf ihrer Oberfläche beleuchtet und Energie in einiger Entfemung davon auf der erwähnten Oberfläche der Probe gesammelt wird, mit
- einem Mittel zur Erfassung optischer Information (20, 21, 21'), die von der Beleuchtung erzeugt wird, welche von der beleuchteten Probe stammt,
- einem Mittel zur Versorgung der Probe, die eine zu messende Eigenschaft aufweist, mit Beleuchtung (16', 17') entlang einer Vielzahl verschiedener Wege und
gekennzeichnet durch:
- ein Mittel (11, 12, 13, 14), das auf die erfaßte optische Information anspricht, um eine Vielzahl unabhängiger Signale zu erzeugen, deren Anzahl der Vielzahl von Wegen entspricht, wobei die Signale die von der Probe erhaltene optische Information darstellen und jede Vielzahl unabhängiger Signale von Licht gewonnen wird, das eine Weglänge zurückgelegt hat, die sich von derjenigen des Lichtes unterscheidet, das eine Weglänge zurückgelegt hat, die jeder anderen Vielzahl von Signalen zugeordnet ist; und
- ein Mittel zur Verarbeitung der Signale mit geeigneten Modellen zur Minimierung von Ungenauigkeiten bei der spektroskopischen Bestimmung qualitativer oder quantitativer Eigenschaften der Probe.

9. Gerät nach Anspruch 8, dadurch gekennzeichnet, daß Licht entlang verschiedener Wege zur Probenoberfläche gesandt wird, wobei das Licht auf jedem Weg in einen Punkt oder Bereich einfällt, der sich von einem Detektionspunkt oder -bereich unterscheidet, und daß die Entfernung von dem Eintrittspunkt oder -bereich zu dem Detektionspunkt oder -bereich für jeden Fall unterschiedlich ist.

10. Gerät nach Anspruch 8, gekennzeichnet durch ein Mittel zum gleichzeitigen Bereitstellen der Beleuchtung (16', 17') entlang der Wege.

11. Gerät nach Anspruch 8, gekennzeichnet durch ein Mittel zum sequentiellen Bereitstellen der Beleuchtung (16', 17') entlang der Wege.

12. Gerät nach Anspruch 8, gekennzeichnet durch ein Mittel zur Modulation der den Wegen gelieferten Beleuchtung derart, daß jeder Weg eine andere Modulationseigenschaft aufweist, wobei das Gerät auch ein Mittel aufweist, das auf die voneinander unabhängigen Signale anspricht, um diese zu demodulieren.

13. Gerät nach einem der Ansprüche 8 bis 12, gekennzeichnet:
- durch eine längliche Sonde (10) mit einem Gehäuseabschnitt (30, 31) und einem Spitzenabschnitt, wobei der Gehäuseabschnitt (30, 31) ein mittleres röhrenförmiges Element umfaßt, das von einem ringförmigen äußeren Element umgeben ist;
- dadurch, daß der Spitzenabschnitt eine Mittelöffnung (15), die mit dem mittleren röhrenförmigen Element kommuniziert, und wenigstens eine Ringöffnung aufweist, die mit dem ringförmigen äußeren Element kommuniziert;
- dadurch, daß der Ring oder die Ringe (11, 12, 13, 14) in dem Spitzenabschnitt in bezug auf die Längsachse der Sonde (10) winkelig angeordnet ist/sind;
und entweder durch:
- eine Reihe von Lichtleitfaserbündeln (16, 17), deren Anzahl derjenigen des Ringes oder der Ringe (11, 12, 13, 14) entspricht, der/die in dem äußeren Element angeordnet ist/sind, wobei jedes Bündel so angeordnet ist, daß es an einem Ende aus einem entsprechenden Ring austritt und am anderen Ende an eine Lichtquelle angeschlossen ist; und
- ein optisches Mittel, das in dem mittleren röhrenförmigen Element angeordnet ist, zum Empfang der von einer Probe stammenden optischen Information, die aus der angewandten Beleuchtung einer Probe aus der Mittelöffnung (15) resultiert, und zur Übertragung der Information an eine Erfassungsvorrichtung zum Entwickeln von Signalen, die der optischen Information der Probe entsprechen;
oder
- eine Vielzahl von Lichtleitfaserbündeln (16, 17), deren Anzahl der Vielzahl von Ringen (11, 12, 13, 14) entspricht, die in dem äußeren Element angeordnet sind, wobei wenigstens ein Bündel so angeordnet ist, daß es an einem Ende aus einem entsprechenden Ring zur Aufnahme der Information der Probe austritt und am anderen Ende zum Anschluß an einen Detektor zum Entwickeln eines Signals angepaßt ist; und
- das mittlere röhrenförmige Element an einem Ende mit einer Beleuchtungsquelle verbunden ist, wobei die Beleuchtung aus der Mittelöffnung (15) austritt;
- wobei voneinander unabhängige Signale als Reaktion auf die Beleuchtung, welche die Information der Probe darstellt, erzeugt werden.

14. Gerät nach Anspruch 13, dadurch gekennzeichnet, daß jedes Lichtleitfaserbündel (16, 17) am anderen Ende so angeordnet ist, daß es an eine Beleuchtungsquelle angeschlossen werden kann.

15. Gerät nach Anspruch 13 oder 14, dadurch gekennzeichnet, daß der Spitzenabschnitt und die Lichtleitfaserelemente (21) am Spitzenabschnitt in einem Winkel von etwa 26° bezüglich der Längsachse der Sonde (10) angeordnet sind.

16. Gerät nach einem der Ansprüche 13 bis 15, gekennzeichnet durch wenigstens eine Linse (20), die in dem mittleren röhrenförmigen Element angeordnet ist, um die erhaltene optische Information in der Mittelöffnung (15) zu fokussieren, und durch eine Einrichtung, die auf die fokussierte Information anspricht, um ein dieser Information entsprechendes Signal zu erzeugen.

17. Gerät nach Anspruch 16, dadurch gekennzeichnet, daß die Einrichtung, die auf die fokussierte Information anspricht, ein Lichtleitfaserelement (21) zur Übertragung der fokussierten optischen Information an einen Detektor, der auf die von dem Lichtleitfaserelement (21) übertragene Information anspricht, enthält.

18. Gerät nach einem der Ansprüche 13 bis 17, gekennzeichnet durch ein Lichtleitfasermittel und einen Detektor zur Bereitstellung eines Signals, das der von der Probe empfangenen Beleuchtung entspricht.

19. Gerät nach Anspruch 16, gekennzeichnet durch ein weiteres Mittel, das eine Änderung der Einstellung der Linsen (20) erlaubt.

20. Verwendung eines Gerätes nach einem der Ansprüche 8 bis 19 zur verbesserten optischen Wechselwirkungs-, Durchlässigkeits- und Remissionsmessung.

21. Verwendung eines Gerätes nach einem der Ansprüche 8 bis 19 oder nach Anspruch 20, dadurch gekennzeichnet, daß die Spitze der Sonde (10) nahe einer Probe geringer Größe so angeordnet wird, daß die reflektierte Energie von der Probe auf die Mittelöffnung (15) gerichtet wird.

22. Verwendung nach Anspruch 20 oder 21, dadurch gekennzeichnet, daß man eine zusätzliche Beleuchtungsquelle vorsieht, die Spitze der Sonde (10) benachbart einer nahen Seite einer Probe geringer Größe anordnet, die zusätzliche Beleuchtungsquelle auf einer entfernten Seite der Probe positioniert, die Sonde (10) so verwendet, daß die reflektierte Energie von der Probe auf die Mittelöffnung (15) gerichtet wird und/oder daß die von der zusätzlichen Quelle durch die Probe übertragene Information auf die Mittelöffnung (15) gerichtet wird.

23. Verwendung nach einem der Ansprüche 20 bis 22, gekennzeichnet durch die Schritte: Bereitstellung eines zusätzlichen Detektors zum Entwickeln eines elektrischen Signals als Reaktion auf die Beleuchtung, Anordnung der Spitze der Sonde (10) benachbart der nahen Seite der Probe geringer Größe, Positionierung des zusätzlichen Detektors auf einer entfernten Seite der Probe, Verwendung der Sonde (10) derart, daß die reflektierte Energie von der Probe auf die Mittelöffnung (15) gerichtet und/oder die Energieübertragung von der Sonde (10) von dem zusätzlichen Detektor registriert wird.

24. Verwendung nach einem der Ansprüche 20 bis 23, gekennzeichnet durch den Schritt der selektiven Auswahl eines Betriebsmodus unter Remission, Durchlässigkeit oder kombinierter Remission und Durchlässigkeit.

## Revendications

1. Procédé d'amélioration des mesures d'interaction optiques, dans lequel un spécimen est éclairé en un emplacement sur sa surface et de l'énergie est collectée à une certaine distance sur ladite surface dudit spécimen, comprenant :
- la fourniture d'un éclairage (16', 17') au moyen d'une pluralité de chemins différents à travers ledit spécimen, ayant une caractéristique à mesurer; et caractérisé par les étapes de
- détection d'une pluralité de signaux indépendants développés en même temps ou selon une séquence rapide, représentant une information optique obtenue à partir dudit spécimen en réponse audit éclairage, chaque signal indépendant correspondant à un chemin particulier, dans lequel chacun de ladite pluralité de signaux indépendants est dérivé d'une lumière ayant parcouru une distance de chemin différente d'une lumière ayant parcouru une distance de chemin associée à chaque autre de ladite pluralité de signaux; et
- traitement desdits signaux d'après des techniques de modélisation appropriées, afin de minimiser les imprécisions dans une détermination spectroscopique de caractéristiques qualitatives ou quantitatives du spécimen.

2. Procédé selon la revendication 1, caractérisé en ce qu'une lumière est envoyée le long de chemins différents vers la surface d'échantillon, dans lequel la lumière se trouvant sur chaque chemin arrive en un point où une zone au niveau dudit emplacement et est détectée au niveau d'un point ou zone différent(e) commun(e) de détection, et en ce que la distance entre le point ou zone incident(e) et le point ou zone de détection est différente dans chaque cas.

3. Procédé selon la revendication 1, caractérisé par l'étape de fourniture de l'éclairage (16', 17') du spécimen simultanément le long desdits chemins différents.

4. Procédé selon la revendication 1, caractérisé par l'étape de fourniture de l'éclairage (16', 17') du spécimen de façon séquentielle le long desdits chemins différents.

5. Procédé selon la revendication 3 ou 4, caractérisé par l'étape de fourniture de l'éclairage (16', 17') du spécimen modulée à des fréquences différentes le long desdits chemins différents, respectivement, pour distinguer un signal détecté indépendant d'un autre.

6. Procédé selon l'une quelconque des revendications 3 à 5, caractérisé par l'étape de fourniture d'un éclairage (16', 17') du spécimen avec des codes de séquence de temps différents le long desdits chemins différents, respectivement, pour distinguer un signal détecté indépendant d'un autre.

7. Procédé selon l'une quelconque des revendications 1 à 6, caractérisé par l'étape de fourniture de l'éclairage (16', 17') suivant un angle par rapport à l'axe optique du moyen de détection.

8. Appareil d'amélioration des mesures d'interaction optiques, dans lequel un spécimen est éclairé en un emplacement sur sa surface et de l'énergie est collectée à une certaine distance sur ladite surface dudit spécimen,
comprenant
- des moyens pour mesurer une information optique (20, 21, 21') développée par ledit éclairage fourni par ledit spécimen éclairé,
- des moyens pour fournir un éclairage (16', 17') pour ledit spécimen ayant une caractéristique à mesurer, le long d'une pluralité de chemins différents; et caractérisé par:
- des moyens (11, 12, 13, 14) sensibles à ladite information optique mesurée, afin de développer une pluralité de signaux indépendants correspondant en nombre à ladite pluralité de chemins, lesdits signaux représentant ladite information optique obtenue à partir dudit spécimen, dans lequel chacun de ladite pluralité de signaux indépendants est dérivé d'une lumière ayant parcouru une distance de chemins différente d'une lumière ayant parcouru une distance de chemin associée à chaque autre de ladite pluralité de signaux; et
- des moyens pour traiter lesdits signaux d'après des techniques de modélisation appropriées, pour minimiser les imprécisions lors d'une détermination spectroscopique de caractéristiques quantitatives ou qualitatives du spécimen.

9. Appareil selon la revendication 8, caractérisé en ce qu'une lumière est envoyée le long de chemins différents vers la surface d'échantillon, dans lequel la lumière se trouvant sur chaque chemin arrive en un point ou zone différent(e) d'un point ou zone de détection et en ce que la distance entre le point ou zone incident(e) et le point ou zone de détection est différente dans chaque cas.

10. Appareil selon la revendication 8, caractérisé par des moyens fournissant l'éclairage (16', 17') simultanément le long desdits chemins.

11. Appareil selon la revendication 8, caractérisé par des moyens fournissant l'éclairage (16', 17') séquentiellement le long desdits chemins.

12. Appareil selon la revendication 8, caractérisé par des moyens servant à moduler ledit éclairage fourni auxdits chemins, de manière que chaque chemin présente une caractéristique de modulation différente, ledit appareil comprenant également un moyen sensible auxdits signaux indépendants afin de démoduler lesdits signaux.

13. Appareil selon l'une quelconque des revendications 8 à 12, caractérisé par
- une sonde allongée (10) ayant une partie de corps (30,31) et une partie de pointe, la partie de corps (30,31) comprenant un élément tubulaire central entouré par un élément extérieur annulaire;
- la partie de pointe ayant une ouverture centrale (15) qui communique avec ledit élément tubulaire central et au moins une ouverture annulaire qui communique avec ledit élément extérieur annulaire;
- la ou les bagues (11, 12, 13, 14) se trouvant dans ladite partie de pointe étant inclinés par rapport à l'axe longitudinal de la sonde (10);
et soit:
- un certain nombre de faisceaux de fibres optiques (16, 17) dont le nombre correspond à ladite bague ou bagues (11, 12, 13, 14) disposées dans ledit élément extérieur, chaque faisceau étant agencé à une extrémité afin de sortir au niveau d'une bague respective et, à l'autre extrémité, au moins un tel faisceau devant être relié à une source d'éclairage;
- des moyens optiques disposés dans l'élément tubulaire central afin de recevoir une information optique résultant d'un éclairage appliqué sur un spécimen à partir de ladite ouverture centrale (15), depuis un spécimen et afin de véhiculer ladite information vers un dispositif de mesure, de manière à développer des signaux représentant ladite information optique de spécimen;
soit
- une pluralité de faisceaux de fibres optiques (16, 17) dont le nombre correspond à ladite pluralité de bagues (11, 12, 13, 14) disposées dans ledit élément extérieur, au moins un faisceau étant agencé à une extrémité de façon à sortir au niveau d'une bague respective, pour recevoir une information de spécimen et, à l'autre extrémité, adapté de façon à être relié à un détecteur servant à développer un signal; et
- ledit élément tubulaire central étant relié par une extrémité à une source d'éclairage, cet éclairage sortant par l'ouverture central (15);
- de manière que des signaux indépendants répondant audit éclairage représentant ladite information du spécimen soient développés.

14. Appareil selon la revendication 13, caractérisé en ce que chaque faisceau de fibres optiques (16, 17) est agencé à l'autre extrémité de façon à être relié à une source d'éclairage.

15. Appareil selon la revendication 13 ou 14, caractérisé en ce que ladite partie de pointe et les éléments de fibres optiques (21) au niveau de la partie de pointe sont inclinés en formant un angle d'environ 26° par rapport à l'axe longitudinal de la sonde (10).

16. Appareil selon l'une quelconque des revendications 13 à 15, caractérisé par au moins une lentille (20) disposée dans ledit élément tubulaire central afin de focaliser l'information optique reçue dans ladite ouverture centrale (15) et un moyen répondant à l'information focalisée pour former un signal représentant ladite information.

17. Appareil selon la revendication 16, caractérisé en ce que ledit moyen répondant à l'information focalisée comprend un élément de fibres optiques (21) afin de véhiculer l'information optique focalisée vers un détecteur répondant à l'information optique véhiculée par l'élément de fibres optiques (21).

18. Appareil selon l'une quelconque des revendications 13 à 17, caractérisé par un moyen de fibres optiques et un détecteur servant à fournir un signal représentatif de l'éclairage reçu par le spécimen.

19. Appareil selon la revendication 16, caractérisé par un autre moyen permettant à la focalisation desdites lentilles (20) d'être modifiée.

20. Utilisation d'un appareil selon l'une quelconque des revendications 8 à 19 afin d'obtenir de meilleures mesures d'interaction, de transmission et de réflection optiques.

21. Utilisation d'un appareil selon l'une quelconque des revendications 8 à 19 ou la revendication 20, caractérisée par l'agencement de la pointe de la sonde (10) de manière adjacente à un spécimen de petite taille, de manière que l'énergie reflétée par ledit spécimen soit orientée vers ladite ouverture centrale (15).

22. Utilisation selon la revendication 20 ou 21, caractérisé par l'agencement d'une autre source d'éclairage, l'agencement de la pointe de la sonde (10) de manière adjacente à un coté proche d'un spécimen de petite taille, l'agencement de l'autre source d'éclairage sur un coté éloigné dudit spécimen, utilisation de ladite sonde (10) de manière que l'énergie reflétée par ledit spécimen soit orientée vers ladite ouverture centrale (15) et/ou que l'énergie transmise par ladite autre source via ledit spécimen soit orientée vers ladite ouverture centrale (15).

23. Utilisation selon l'une quelconque des revendications 20 à 22, caractérisée par les étapes d'agencement d'un autre détecteur afin de développer un signal électrique répondant à un éclairage, agencement de la pointe de la sonde (10) de manière adjacente au coté proche d'un spécimen de petite taille, agencement dudit autre détecteur sur un coté éloigné dudit spécimen, utilisation de ladite sonde (10) de manière que l'énergie reflétée par ledit spécimen soit orientée vers ladite ouverture centrale (15) et/ou que l'énergie transmise par ladite sonde (10) soit détectée par ledit autre détecteur.

24. Utilisation selon l'une quelconque des revendications 20 à 23, caractérisée par l'étape de choix sélectif d'un mode opérationnel de réflection, transmission ou de réflection et transmission combinées.
